# EUROPÄISCHE PATENTANMELDUNG

(11) **EP 4 478 477 A1**
(43) Veröffentlichungstag der Anmeldung: **18.12.2024**
(21) Anmeldenummer: 24179564.0
(22) Anmeldetag: 03.06.2024
(51) Int. Cl.: H01M 10/42, H01M 50/284, H01M 50/289

(54) **BATTERIEMODULANORDNUNG UND MONTAGEVERFAHREN EINER PLATINE EINES BATTERIEMANAGEMENTSSYSTEMS IN EINER BATTERIEMODULANORDNUNG**

(30) Priorität: 13.06.2023 DE 102023002392
(71) Anmelder: DEUTZ Aktiengesellschaft, 51149 Köln (DE)
(72) Erfinder: Hoffmann, Oliver Günter, 53501 Grafschaft (DE); Sachser, Michael, 42929 Wermelskirchen (DE)

(57) **Zusammenfassung**

Batteriemodulanordnung umfassend: ein erstes Batteriemodul (8) und ein zweites Batteriemodul (9), die jeweils ein oder mehrere Batteriezellen umfassen, eine Platine (11) einer Batterieüberwachungseinheit; und ein Halteelement (16), das eine Aufnahme aufweist, in der die Platine (11) angeordnet ist, dadurch gekennzeichnet, dass das Halteelement (16) zwischen dem ersten Batteriemodul (8) und dem zweiten Batteriemodul (9) angeordnet ist.

## Beschreibung

Die vorliegende Erfindung betrifft eine Batteriemodulanordnung mit einem Halteelement für eine Platine einer Batterieüberwachungseinheit und ein Montageverfahren einer Platine eines Batteriemanagementssystems in einer Batteriemodulanordnung.

In Batteriemodulanordnungen werden mehrere Batteriemodule räumlich zusammengefasst. Hierzu werden die Batteriemodule häufig in einem Gehäuse angeordnet, in dem auch weitere Komponenten, wie beispielsweise Kabelbäume und Batterieüberwachungselektronik untergebracht sind.

Aus der WO 2010 040 520 A2 ist eine Kraftfahrzeug-Batterie mit vier Batteriemodulen und integriertem Zellenmonitoring bekannt. Die vier Batteriemodule sind unmittelbar nebeneinander angeordnet und eine Zellmonitoringplatine ist oberhalb einer der Batteriemodule angeordnet.

Aus der DE 10 2010 014 905 A1 ist eine Energiespeicherzelleinheit bekannt, umfassend sechs nebeneinander angeordnete Energiespeicherzelleinheiten. Oberhalb der Energiespeicherzelleinheiten ist eine CSE-Platine 28 mit entsprechender Steuerelektronik angeordnet.

Der vorliegenden Erfindung liegt die Aufgabe zugrunde, eine Batteriemodulanordnungen und ein Montageverfahren einer Platine eines Batteriemanagementssystems in einer Batteriemodulanordnung bereitzustellen, die jeweils eine bauraumoptimale Positionierung einer Platine einer Batterieüberwachungseinheit ermöglichen.

Zur Lösung der Aufgabe wird eine Batteriemodulanordnung vorgeschlagen, umfassend: ein erstes Batteriemodul und ein zweites Batteriemodul, die jeweils ein oder mehrere Batteriezellen umfassen, eine Platine einer Batterieüberwachungseinheit; und ein Halteelement, das eine Aufnahme aufweist, in der die Platine angeordnet ist, wobei das Halteelement zwischen dem ersten Batteriemodul und dem zweiten Batteriemodul angeordnet ist.

In einer möglichen Ausführungsform kann das Halteelement aus einem geschäumten Kunststoff hergestellt sein. Der geschäumte Kunststoff kann insbesondere expandiertes Polypropylen (EPP) sein. Geschäumte Kunststoffe und hiervon insbesondere EPP können mit hinreichenden Toleranzen hergestellt werden und weisen zudem eine gewisse Elastizität auf, die eine lokale Umformung mit geringem Kraftaufwand ermöglicht. Somit kann durch den Einsatz von geschäumten Kunststoffen eine leichte Montage des Halteelements zwischen den Batteriemodulen mit hoher Positionstreue über die Lebensdauer der Batteriemodulanordnung realisiert werden. Zudem weisen geschäumte Kunststoffe eine sehr niedrige Dichte auf, sodass deren Verwendung beispielsweise gegenüber metallischen Halteelementen einen signifikanten Gewichtsvorteil bedingt. Darüber hinaus weisen geschäumte Kunststoffe eine hohe Dämpfungskonstante auf, sodass die Halteelemente aus geschäumten Kunststoff auf die Platine einwirkende Schwingungen dämpfen können.

In einer weiteren möglichen Ausführungsform kann das Halteelement eine Aussparung als Aufnahme aufweisen, in die die Platine eingesetzt ist. Die Platine kann insbesondere in einer Richtung von dem ersten Batteriemodul hin zu dem zweiten Batteriemodul und/oder umgekehrt überstandsfrei in der Aussparung angeordnet sein.

Des Weiteren kann die Platine mit einem oder mehreren Befestigungselementen an dem Halteelement befestigt sein. Das Befestigungselement kann ein Spreizdübel sein, der einen federnden Spreizabschnitt aufweist. Der Spreizabschnitt kann in einer Bohrung des Halteelements angeordnet sein.

In einer weiteren möglichen Ausführungsform kann das Halteelement eine erste Batteriemodulanlagefläche aufweisen, die einer Seitenwand des zweiten Batteriemoduls gegenüberliegt, und eine zweite Batteriemodulanlagefläche, die einer Seitenwand des ersten Batteriemoduls gegenüberliegt.

Die erste Batteriemodulanlagefläche und die zweite Batteriemodulanlagefläche können in einer Richtung quer, insbesondere orthogonal, zu der ersten Batteriemodulanlagefläche und/oder der zweiten Batteriemodulanlagefläche zumindest abschnittsweise in Überdeckung zueinander angeordnet sein. Alternativ oder in Kombination können die erste Batteriemodulanlagefläche und die zweite Batteriemodulanlagefläche in einer Richtung quer, insbesondere orthogonal, zu der Seitenwand des ersten Batteriemoduls und/oder der Seitenwand des zweiten Batteriemoduls zumindest abschnittsweise in Überdeckung zueinander angeordnet sein.

Im nichtmontierten Zustand des Halteelements kann ein Abstand der ersten Batteriemodulanlagefläche von der zweiten Batteriemodulanlagefläche in einer Richtung senkrecht zu der ersten Batteriemodulanlagefläche und/oder der zweiten Batteriemodulanlagefläche größer oder gleich einem Abstand des ersten Batteriemoduls und des zweiten Batteriemoduls in der gleichen Richtung sein. Alternativ oder in Kombination kann im nichtmontierten Zustand des Halteelements ein Abstand der ersten Batteriemodulanlagefläche von der zweiten Batteriemodulanlagefläche in einer Richtung senkrecht zu der Seitenwand des ersten Batteriemoduls und/oder der Seitenwand des zweiten Batteriemoduls größer oder gleich einem Abstand des ersten Batteriemoduls von dem zweiten Batteriemodul in der gleichen Richtung sein. Mit anderen Worten kann der Abstand der ersten Batteriemodulanlagefläche von der zweiten Batteriemodulanlagefläche gegenüber dem Abstand, der zwischen dem ersten Batteriemodul und dem zweiten Batteriemodul gebildet ist, ein Übermaß aufweisen oder identisch sein

In einer weiteren möglichen Ausführungsform kann das Halteelement einen ersten Positionierabschnitt aufweisen, der eine erste Höhenpositionierungsfläche und eine erste Seitenpositionierungsfläche umfasst. Die erste Batteriemodulanlagefläche, die erste Höhenpositionierungsfläche und die erste Seitenpositionierungsfläche können orthogonal zueinander ausgerichtet sein. Das Halteelement kann alternativ oder in Kombination einen zweiten Positionierabschnitt aufweisen, der eine zweite Höhenpositionierungsfläche und eine zweite Seitenpositionierungsfläche umfasst. Die zweite Batteriemodulanlagefläche, die zweite Höhenpositionierungsfläche und die zweite Seitenpositionierungsfläche können orthogonal zueinander ausgerichtet sein. Die erste Höhenpositionierungsfläche und die die zweite Höhenpositionierungsfläche können parallel zueinander ausgerichtet sein. Die erste Höhenpositionierungsfläche und die zweite Höhenpositionierungsfläche können insbesondere in einer gemeinsamen Ebene liegen.

Des Weiteren kann das Halteelement eine Bodenaufstandsfläche umfassen, die parallel zu der ersten Höhenpositionierungsfläche und/oder der zweiten Höhenpositionierungsfläche angeordnet ist. Der Abstand der Bodenaufstandsfläche von der ersten Höhenpositionierungsfläche kann größer oder gleich einer Höhe des zweiten Batteriemoduls sein. Alternativ oder in Kombination kann ein Abstand der Bodenaufstandsfläche von der zweiten Höhenpositionierungsfläche größer oder gleich einer Höhe des ersten Batteriemoduls sein.

In einer weiteren möglichen Ausführungsform kann die erste Seitenpositionierungsfläche und die zweite Seitenpositionierungsfläche parallel zueinander und jeweils in entgegengesetzte Richtungen aufeinander zu ausgerichtet sein. Ein Abstand der ersten Seitenpositionierungsfläche von der zweiten Seitenpositionierungsfläche kann größer oder gleich einer gemeinsamen Breite des ersten Batteriemoduls und des zweiten Batteriemoduls sein.

In einer weiteren möglichen Ausführungsform kann die Batteriemodulanordnung ein Gehäuse mit einem Innenraum umfassen, in dem das erste Batteriemodul, das zweite Batteriemodul und das Halteelement angeordnet sind. Das Halteelement kann eine Abschlussfläche aufweisen, die insbesondere parallel zu der Bodenaufstandsfläche angeordnet ist. Die Abschlussfläche kann mit einem Deckel des Gehäuses mittelbar oder unmittelbar in Anlage sein. Der Abstand der Abschlussfläche von der Bodenaufstandsfläche kann größer oder gleich einer Höhe des Innenraums sein. Mit anderen Worten kann das Halteelement unter Vorspannung in dem Gehäuse eingesetzt sein.

In einer weiteren möglichen Ausführungsform kann das Halteelement einen Halteabschnitt mit einem freien Ende aufweisen, der sich entlang einer Halteabschnittlängsachse erstreckt. Der Halteabschnitt kann eine Ausnehmung aufweisen, in der ein elektronisches Bauteil angeordnet ist. Die Ausnehmung kann als eine erste Nut ausgestaltet sein, die parallel zu der Halteabschnittlängsachse verläuft. In Umfangsrichtung um die Halteabschnittlängsachse kann eine zweite Nut in dem Halteabschnitt ausgebildet sein, wobei in der zweiten Nut ein ringförmiges Befestigungselement angeordnet ist, das das elektronische Bauteil mit dem Halteabschnitt verbindet.

Zur Lösung der Aufgabe wird ferner ein Montageverfahren einer Platine eines Batteriemanagementssystems in einer Batteriemodulanordnung vorgeschlagen, umfassend die Schritte: Montieren eines ersten Batteriemoduls und eines zweiten Batteriemoduls in einem Bodenelement eines Gehäuses entlang einer Längsachse, sodass zwischen dem ersten Batteriemodul und dem zweiten Batteriemodul ein Spalt gebildet ist; Befestigen der Platine an einem Halteelement; und Einschieben des Halteelements in den Spalt, wobei das Halteelemente von einer Position außerhalb des Spalts in einer Radialebene bezüglich der Längsachse in Richtung des Bodenelements bewegt wird.

Das Montageverfahren kann insbesondere auf eine Batteriemodulanordnung einer zuvor beschriebenen Ausgestaltung angewandt werden.

In einer möglichen Ausgestaltung kann das Montageverfahren die folgenden Schritte umfassen: Verbinden eines Deckels des Gehäuses mit dem Bodenelement, sodass ein Innenraum zwischen dem Bodenelement und dem Deckel gebildet ist, in dem das erste Batteriemodul, das zweite Batteriemodul und das Halteelement zusammen mit der Platine angeordnet sind, wobei gleichzeitig das Halteelement zwischen dem Bodenelement und dem Deckel verspannt wird.

Nachfolgend wir eine mögliche Ausführungsform einer erfindungsgemäßen Batteriemodulanordnung und des erfindungsgemäßen Montageverfahrens anhand der

Figurenzeichnungen beschrieben. Hier zeigt:
- Figur 1: eine perspektivische Ansicht einer erfindungsgemäßen Batteriemodulanordnung ohne Deckel;
- Figur 2: die Ansicht aus Figur 1 mit den Halteelementen in einer Position vor der Montage;
- Figur 3: eine Draufsicht auf die Batteriemodulanordnung aus Figur 1 ohne Deckel;
- Figur 4: eine Schnittansicht der Batteriemodulanordnung aus Figur 1 mit Deckel, wobei die Schnittebene durch das erste Halteelemente verläuft;
- Figur 5: eine perspektivische Ansicht des ersten Halteelementes aus Figur 1, wobei die Platine in einer Position vor der Befestigung an dem Halteelement dargestellt ist;
- Figur 6: eine perspektivische Ansicht des ersten Halteelementes aus Figur 1 mit montierter Platine;
- Figur 7: eine Frontansicht des ersten Halteelementes aus Figur 1 ohne Platine;
- Figur 8: eine Rückansicht des ersten Halteelementes aus Figur 1 mit montierter Platine;
- Figur 9: eine Draufsicht auf das erste Halteelement aus Figur 1 ;
- Figur 10: eine perspektivische Schnittansicht der Rückseite des ersten Halteelementes aus Figur 1; und
- Figur 11: ein Flussdiagramm für ein Montageverfahren einer Platine eines Batteriemanagementssystems in einer Batteriemodulanordnung.

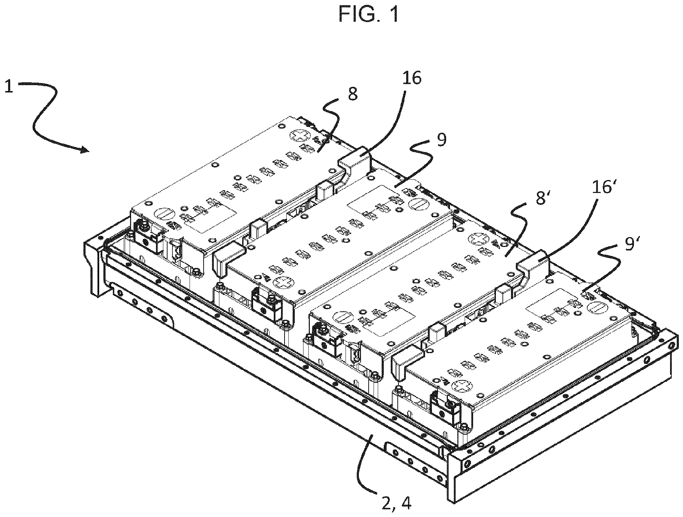

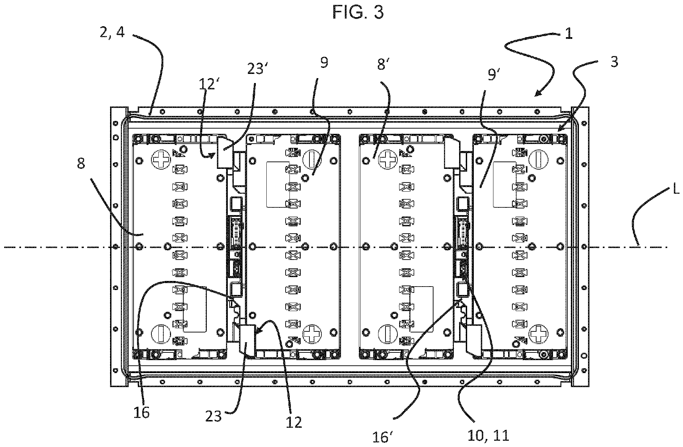

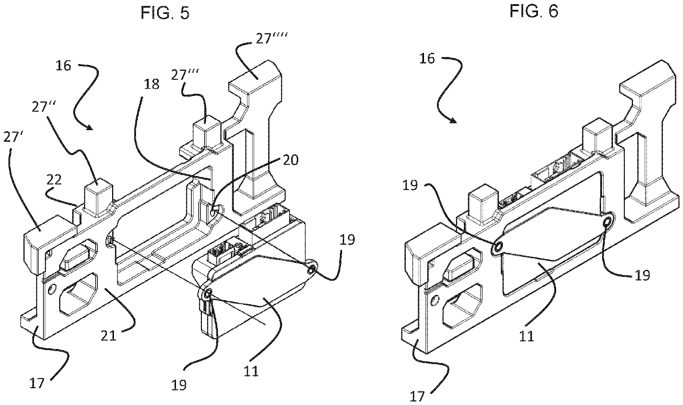

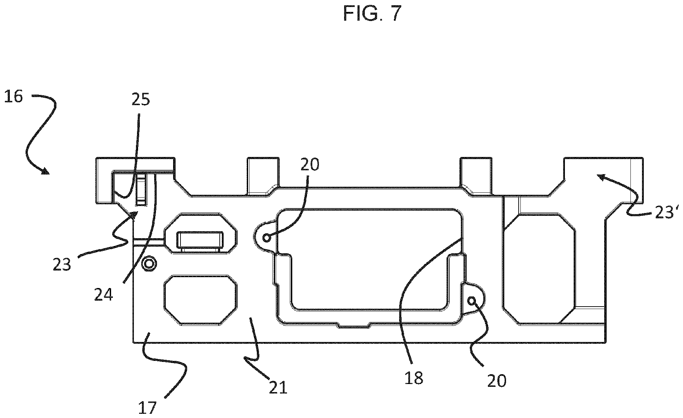

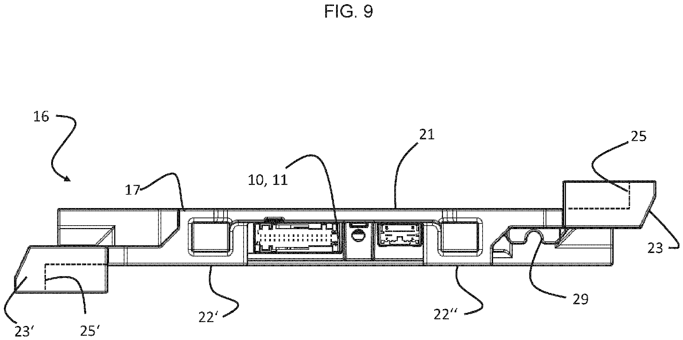

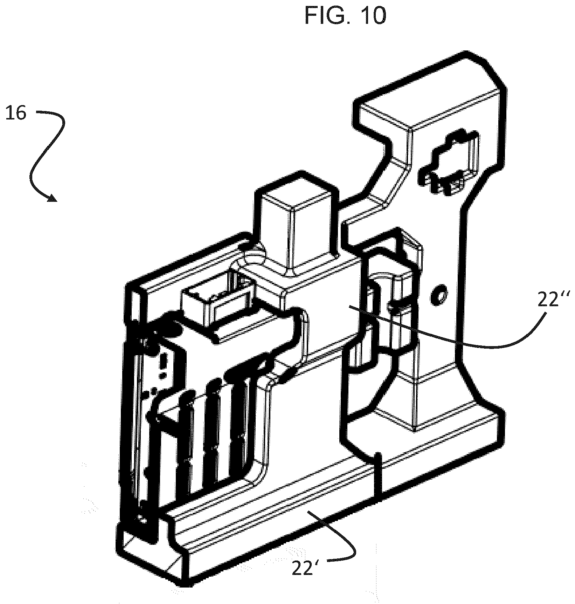

Die Figuren 1 bis 10, die nachfolgend gemeinsam beschrieben werden, zeigen eine erfindungsgemäße Batteriemodulanordnung 1. Die Batteriemodulanordnung 1 umfasst ein Gehäuse 2 mit einem Bodenelement 4 und einem Deckel 6, die zusammen einen Innenraum 3 des Gehäuses 2 begrenzen. In dem Gehäuse 2 sind vier Batteriemodule angeordnet, ohne auf diese exakte Zahl an Batteriemodulen beschränkt zu sein. Die Batteriemodule weisen ein oder mehrere Batteriezellen auf und sind über ein nicht dargestellten Hochvolt-Kabelbaum miteinander verbunden.

Die Batteriemodule sind zu je zwei Paaren eines ersten Batteriemoduls 8, 8' und eines zweiten Batteriemoduls 9, 9' angeordnet. Das erste Batteriemodul 8, 8' und das zweite Batteriemodul 9, 9' sind jeweils identisch ausgeführt und um 180° verdreht zueinander angeordnet. Es ist insbesondere denkbar, dass die Modulanordnung genau ein erstes Batteriemodul 8 und ein zweites Batteriemodul 9 umfasst.

Die ersten Batteriemodule 8, 8' und zweiten Batteriemodule 9, 9' sind entlang einer Längsachse L der Batteriemodulanordnung 1 nebeneinander angeordnet. Die ersten und zweiten Batteriemodule 8, 8`, 9, 9' sind dabei in abwechselnder Reihenfolge angeordnet. Die ersten und zweiten Batteriemodule 8, 8`, 9, 9' weisen jeweils an den Seiten, die einem der anderen Batteriemodule gegenüberliegen, eine ebene Seitenwand auf. Die Seitenwand ist jeweils orthogonal zu der Längsachse L angeordnet. Mit anderen Worten definiert die Seitenwand eine Ebene, die orthogonal zu der Längsachse L angeordnet ist. Zwischen einem ersten Batteriemodul 8, 8' und dem angrenzenden zweiten Batteriemodul 9, 9' ist jeweils ein Spalt ausgebildet. In dem jeweiligen Spalt ist ein Halteelement 16, 16' angeordnet. Das erste Halteelement 16 ist zwischen dem ersten Batteriemodul 8 und dem zweiten Batteriemodul 9 angeordnet und das zweite Halteelement 16' ist zwischen dem ersten Batteriemodul 8' und dem zweiten Batteriemodul 9' angeordnet.

Das erste Halteelement 16 und das zweite Halteelement 16' sind identisch ausgeführt. Daher werden die beiden Bauteile nachfolgend anhand des ersten Halteelements 16 gemeinsam beschrieben.

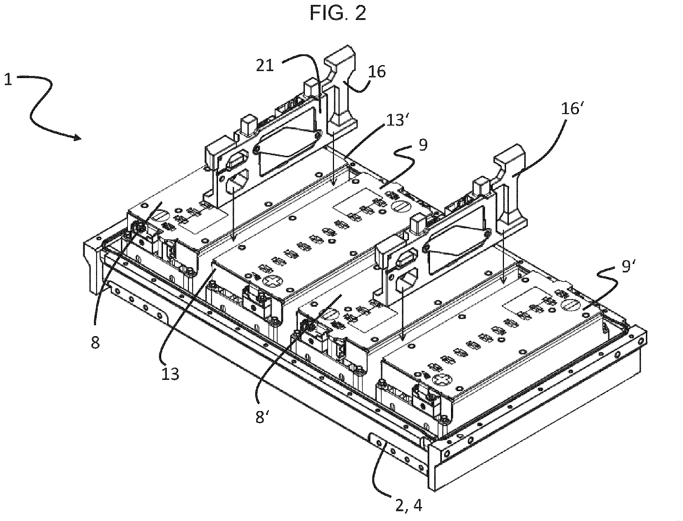

Wie insbesondere aus Figur 2 zu erkennen ist, wird zur Montage des Halteelements 16 dieses in einer Ebene, die orthogonal zu der Längsachse L der Batteriemodulanordnung 1 angeordnet ist, in Richtung des Bodenelement 4 des Gehäuses 2 bewegt und zwischen das erste Batteriemodul 8 und das zweite Batteriemodul 9 eingeschoben. Diese Montagebewegung ist in Figur 2 anhand von Pfeilen verdeutlicht. Das Halteelement 16 wird dabei so weit in den Spalt geschoben, bis eine Bodenaufstandsfläche 26 des Halteelements 16 in Anlage mit einer Bodenfläche 5 des Bodenelements 4 ist. Alternativ wird das Halteelement 16 so weit in den Spalt geschoben, bis das Halteelement 16 auf einem von dem ersten Batteriemodul und dem zweiten Batteriemodul aufliegt.

Das Halteelement 16 umfasst einen Körper 17 aus geschäumtem Kunststoff. Im vorliegenden Fall ist der Körper 17 konkret aus expandiertem Polypropylen (EPP) hergestellt.

Das Halteelement 16 weist eine zentrale Aussparung 18 auf, in der eine Platine 11 eines Batteriemanagementsystems 10 angeordnet ist. Die Platine 11 ist mit einem oder mehreren Befestigungselementen 19 an dem Halteelement 16 befestigt. Im vorliegenden Fall ist das Befestigungselement 19 als Spreizdübel ausgeführt, der sich in eine Bohrung 20 des Halteelements 16 erstreckt.

Die Platine 11 des ersten Halteelements 16 ist über einen ersten Kabelbaum mit dem ersten Batteriemodul 8 und dem zweiten Batteriemodul 9 verbunden. Der erste Kabelbaum weist jeweils einen Stecker für das erste Batteriemodul 8 und das zweite Batteriemodul 9 auf, mit dem die Zellspannung und die Zelltemperatur des jeweilige Batteriemoduls abgegriffen werden. Die Platine 11 des ersten Halteelements 16 ist mit der Platine 11 des zweiten Halteelement 16`über einen zweiten Kabelbaum verbunden. Über den zweiten Kabelbaum können die Platine 11 des ersten Halteelements 16 und die Platine 11 des zweiten Halteelements 16' miteinander und mit einem Zentralmodul der Batterieüberwachsungseinheit kommunizieren.

Das Halteelement 16 weist eine erste Batteriemodulanlagefläche 21 auf, die dem zweiten Batteriemodul 9 gegenüberliegt. Die erste Batteriemodulanlagefläche 21 ist mit der Seitenwand des zweiten Batteriemoduls 9 in Anlage. Die erste Batteriemodulanlagefläche 21 liegt in einer Ebene, die orthogonal zu der Längsachse L angeordnet ist. Die erste Batteriemodulanlagefläche 21 ist vorliegend eine geschlossene Fläche, die die Aussparung 18 umschließt. Es ist auch denkbar, dass die erste Batteriemodulanlagefläche 21 aus mehreren Teilflächen zusammengesetzt ist, die räumlich voneinander getrennt sind und in einer gemeinsamen Ebene liegen.

Das Halteelement 16 weist eine zweite Batteriemodulanlagefläche 22 auf, die dem ersten Batteriemodul 8 gegenüberliegt. Die zweite Batteriemodulanlagefläche 22 ist mit der Seitenwand des ersten Batteriemoduls 8 in Anlage. Die zweite Batteriemodulanlagefläche 22 liegt in einer Ebene, die orthogonal zu der Längsachse L angeordnet ist. Die zweite Batteriemodulanlagefläche 22 setzt sich im vorliegenden Fall aus einer ersten geschlossenen Teilflächen 22' und einer zweiten geschlossenen Teilfläche 22" zusammen, die jeweils in der genannten Ebene liegen.

Die erste Batteriemodulanlagefläche 21 und die zweite Batteriemodulanlagefläche 22 sind parallel zueinander angeordnet. Die erste Batteriemodulanlagefläche 21 und die zweite Batteriemodulanlage 22 überdecken sich zumindest abschnittsweise in einer Richtung parallel zu der Längsachse L.

Im montierten Zustand des Halteelements 16 ist der Abstand der ersten Batteriemodulanlagefläche 21 von der zweiten Batteriemodulanlagefläche 22 in einer Richtung parallel zu der Längsachse L gleich dem Abstand des ersten Batteriemoduls 8 von dem zweiten Batteriemoduls 9 in derselben Richtung. Das Halteelement 16 ist in einer Richtung parallel zu der Längsachse L formschlüssig zwischen dem ersten Batteriemodul 8 und dem zweiten Batteriemodul 9 angeordnet.

Die zweite Batteriemodulanlagefläche 22 weist im nichtmontierten Zustand des Halteelements 16 im Bereich der zweiten Teilflächen 22" eine erste Aufdickung in einer Richtung parallel zu der Längsachse L auf. Mit anderen Worten ist die Aufdickung orthogonal zu der der zweiten Batteriemodulanlagefläche 22 zugeordneten Ebene auf die zweite Teilfläche 22" aufgebracht. Die Aufdickung der Teilfläche 22" ist vorliegend keilförmig ausgebildet. Der Betrag der Aufdickung der Teilfläche 22" nimmt dabei mit größer werdendem Abstand von einer Bodenaufstandsfläche 26 des Halteelements 16 zu.

Die Platine 11 ist in der Ausnehmung 18 so angeordnet, dass diese bezüglich der der ersten Batteriemodulanlagefläche 21 zugeordneten Ebene und der der zweiten Batteriemodulanlagefläche 22 zugeordnete Ebene überstandsfrei ist.

Beim Einschieben des Halteelements 16 in den Spalt zwischen dem ersten Batteriemodul 8 und dem zweiten Batteriemodul 9 wird die Aufdickung derart verformt respektive zusammengepresst, dass der Bereich der Aufdickung nachfolgend eine Fläche in der Ebene der zweiten Batteriemodulanlagefläche 22 bildet. Das Halteelement 16 ist zwischen dem ersten Batteriemodul 8 und dem zweiten Batteriemodul 9 verspannt angeordnet. Das Halteelement 16 ist in einer Ebene, die orthogonal zu der Längsachse L angeordnet ist, reibschlüssig zwischen dem ersten Batteriemodul 8 und dem zweiten Batteriemodul 9 angeordnet.

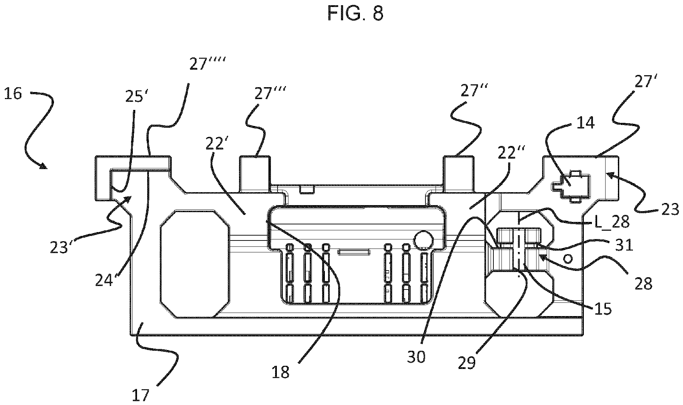

Es versteht sich, dass sowohl die erste Batteriemodulanlagefläche 21 als auch die zweite Batteriemodulanlagefläche 22 ein oder mehrere der genannten Aufdickungen aufweisen kann. Im vorliegenden Fall ist im Bereich auf den das Bezugszeichen 22' in Figur 8 zeigt eine zweite Aufdickung vorgesehen.

Das Halteelement 16 umfasst einen ersten Positionierabschnitt 23 und einen zweiten Positionierabschnitt 23`. Der erste Positionierabschnitt 23 umfasst eine Höhenpositionierungsfläche 24. Die Höhenpositionierungsfläche 24 ist parallel zu der Bodenaufstandsfläche 26 ausgerichtet. Die Höhenpositionierungsfläche 24 liegt in einer Ebene, die parallel zu der Längsachse L angeordnet ist. Das zweite Batteriemodul 9 weist eine Auflagefläche 12 auf, die mit der Höhenpositionierungsfläche 24 des Halteelements 16 in Anlage ist.

Im nichtmontierten Zustand des Halteelements 16 ist der Abstand der Höhenpositionierungsfläche 24 des ersten Positionierabschnitts 23 von der Bodenaufstandsfläche 26 größer oder gleich dem Abstand der Auflagefläche 12 des zweiten Batteriemoduls 9 von der Bodenfläche 5 des Bodenelements 4.

Der erste Positionierabschnitt 23 umfasst zudem eine Seitenpositionierungsfläche 25. Die Seitenpositionierungsfläche 25 ist orthogonal zu der Höhenpositionierungsfläche 24 ausgerichtet. Die Seitenpositionierungsfläche 25 liegt in einer Ebene, die parallel zu der Längsachse L angeordnet ist. Das zweite Batteriemodul 9 weist eine Seitenkontaktfläche 13 auf, die mit der Seitenpositionierungsfläche 25 des Halteelements 16 in Anlage ist.

Der erste Positionierabschnitt 23 umfasst weiterhin einen Abschnitt der ersten Batteriemodulanlagefläche 21. Die Höhenpositionierungsfläche 24 und die Seitenpositionierungsfläche 25 stehen jeweils orthogonal auf der ersten Batteriemodulanlagefläche 21.

Der zweite Positionierabschnitt 23' umfasst eine Höhenpositionierungsfläche 24`. Die Höhenpositionierungsfläche 24' ist parallel zu der Bodenaufstandsfläche 26 ausgerichtet. Die Höhenpositionierungsfläche 24' liegt in einer Ebene, die parallel zu der Längsachse L angeordnet ist. Das erste Batteriemodul 8 weist eine Auflagefläche 12' auf, die mit der Höhenpositionierungsfläche 24' des Halteelements 16 in Anlage ist. Die Ebene der Höhenpositionierungsfläche 24 des ersten Positionierabschnitts 23 und die Ebene der Höhenpositionierungsfläche 24' des zweiten Positionierabschnitt 23' sind parallel zueinander angeordnet und insbesondere identisch.

Im nichtmontierten Zustand des Halteelements 16 ist der Abstand der Höhenpositionierungsfläche 24' des zweiten Positionierabschnitts 23' von der Bodenaufstandsfläche 26 größer oder gleich dem Abstand der Auflagefläche 12' des ersten Batteriemoduls 8 von der Bodenfläche 5 des Bodenelements 4.

Der zweite Positionierabschnitt 23' umfasst zudem eine Seitenpositionierungsfläche 25`. Die Seitenpositionierungsfläche 25' ist orthogonal zu der Höhenpositionierungsfläche 24' ausgerichtet. Die Seitenpositionierungsfläche 25' liegt in einer Ebene, die parallel zu der Längsachse L angeordnet ist. Das erste Batteriemodul 8 weist eine Seitenkontaktfläche 13' auf, die mit der Seitenpositionierungsfläche 25 des Halteelements 16 in Anlage ist.

Die Seitenpositionierungsfläche 25 des ersten Positionierabschnitts 23 und die Seitenpositionierungsfläche 25' des zweiten Positionierabschnitts 23' sind in entgegengesetzte Richtungen ausgerichtet und weisen aufeinander zu.

Im nichtmontierten Zustand des Halteelements 16 ist der Abstand der Seitenpositionierungsfläche 25 des ersten Positionierabschnitts 23 von der Seitenpositionierungsfläche 25' des zweiten Positionierabschnitts 23 größer oder gleich dem Abstand der Seitenkontaktfläche 13' des ersten Batteriemoduls 8 von der Seitenkontaktfläche 13 des zweiten Batteriemoduls 9.

Der zweite Positionierabschnitt 23' umfasst weiterhin einen Abschnitt der zweiten Batteriemodulanlagefläche 22. Die Höhenpositionierungsfläche 24' und die Seitenpositionierungsfläche 25' stehen jeweils orthogonal auf der zweiten Batteriemodulanlagefläche 22`.

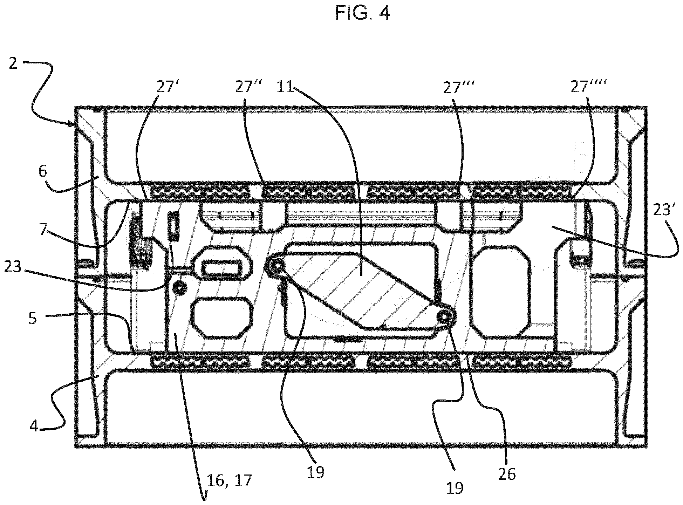

Das Halteelement 16 weist eine Abschlussfläche 27 auf, die in Anlage mit einer Deckelfläche 7 des Deckels 6 ist. Im nichtmontierten Zustand des Halteelements 16 weist die Abschlussfläche 27 einen Abstand von der Bodenaufstandsfläche 26 auf, der größer oder gleich einem Abstand der Bodenfläche 5 des Bodenelements 4 von der Deckelfläche 7 des Deckels 6 im montierten Zustand ist. Die relevante Deckelfläche kann dabei von dem Deckel 6 selbst gebildet werden, wie beispielweise in Figur 4 gezeigt. Alternativ kann der Deckel 6 ein oder mehrere zusätzliche Zwischenelemente umfassen, die zwischen dem Halteelement 16 und dem in Figur 4 gezeigten Deckelelement angeordnet sind.

Die Abschlussfläche 27 setzt sich im vorliegenden Fall aus vier Teilflächen 27`, 27", 27‴, 27ʺʺ zusammen, die jeweils in einer gemeinsamen Ebene liegen und mit der Deckelfläche 7 in Anlage sind. Die vier Teilflächen 27`, 27", 27‴, 27"" sind dabei über die Breite des Halteelements 16 verteilt angeordnet.

Die erste Teilfläche 27' wird durch den ersten Positionierabschnitt 23 und die vierte Teilfläche 27ʺʺ wird durch den zweiten Positionierabschnitt 23' gebildet. Die zweite Teilfläche 27" wird durch ein freies Ende eines ersten Balkenabschnitts des Halteelements 16 gebildet. Die dritte Teilfläche 27‴ wird durch ein freies Ende eines zweiten Balkenabschnitts des Halteelements 16 gebildet.

Das Halteelement 16 ist zwischen dem Bodenelement 4 und dem Deckel 6 verspannt angeordnet. Hierzu wird nach dem Einschieben des Halteelements 16 in den Spalt zwischen dem ersten Batteriemodul 8 und dem zweiten Batteriemodul 9 der Deckel 6 auf das Bodenelement 4 aufgesetzt und über Verschraubungen miteinander verspannt. Dabei wird das Halteelement 16 zwischen dem Bodenelement 4 und dem Deckel 6 geringfügig gestaucht. Durch die Elastizität des geschäumten Kunststoffs werden etwaige Übermaße oder Untermaße zwischen dem Halteelement 16, dem ersten Batteriemodul 8, dem zweiten Batteriemodul 9 und dem Gehäuse 2 ausgeglichen. Das Halteelement 16 ist somit zusammen mit der Platine 11 fest innerhalb des Gehäuses 2 angeordnet.

Die zweite Teilfläche 27" und die erste Aufdickung liegen in einer gemeinsamen ersten Spannebene, die orthogonal zu der ersten Batteriemodulanlagefläche 21 und/oder der zweiten Batteriemodulanlagefläche 22 ausgerichtet ist. Die dritte Teilfläche 27‴ und die zweite Aufdickung liegen in einer gemeinsamen zweiten Spannebene, die orthogonal zu der ersten Batteriemodulanlagefläche 21 und/oder der zweiten Batteriemodulanlagefläche 22 ausgerichtet ist. Die Ausnehmung 18 respektive die Platine 11 ist zumindest abschnittsweise zwischen der ersten Spannebene und der zweiten Spannebene angeordnet.

Das Halteelement 16 umfasst weiter einen Halteabschnitt 28, der sich entlang einer Körperlängsachse L_28 erstreckt und ein freies Ende aufweist. In dem Halteabschnitt 28 ist eine erste Nut 29 ausgebildet, die sich ebenfalls entlang der Körperlängsachse L 28 erstreckt. In der erste Nut 29 kann ein elektronisches Bauteil angeordnet sein, beispielsweise ein Abschlusswiderstand 15 eines der zuvor genannten Kabelbäume.

In dem Halteabschnitt 28 ist eine zweite Nut 30 ausgebildet, die die Körperlängsachse L_28 zumindest abschnittsweise ringförmig umschließt. In der zweiten Nut 30 ist ein ringförmiges Befestigungselement 31 angeordnet, dass die Körperlängsachse L_28 vollständig umschließt und das elektronische Bauteil 15 in der ersten Nut 29 fixiert. Das Befestigungselement 31 kann beispielsweise als Kabelbinder ausgestaltet sein.

Das Halteelement 16 umfasst darüber hinaus eine Befestigungsvorrichtung 14, mit der Elemente der oben genannten Kabelbäume an dem Halteelement 16 befestigbar sind. Die Befestigungsvorrichtung 14 kann in Form eines Lamellenclips mit Verdrehschutz ausgestaltet sein, der in einer Bohrung des Halteelements 16 eingesetzt ist. Die Lamellen des Clips können dabei durch die Bohrung hindurchgreifen und sich mit Hinterschneidungen in dem Halteelement 16 festkrallen.

In dem Bodenelement 4 und/oder dem Deckel 6 sind Kühlkanäle zur Kühlung der Batteriemodulanordnung 1 integriert.

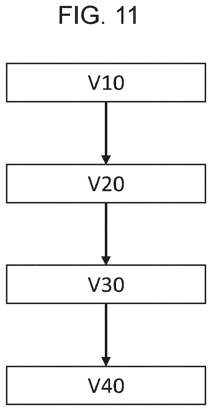

In Figur 11 wird ein Montageverfahren einer Platine eines Batteriemanagementssystems in einer Batteriemodulanordnung anhand eines Flussdiagramms dargestellt.

In einem ersten Prozessschritt V10 wird ein erstes Batteriemodul 8 und ein zweites Batteriemodul 9 in einem Bodenelement 4 eines Gehäuses 2 entlang einer Längsachse L montiert, sodass zwischen dem ersten Batteriemodul 8 und dem zweiten Batteriemodul 9 ein Spalt gebildet ist. Die Batteriemodule 8, 9 werden dabei insbesondere an dem Bodenelement 4 fixiert.

In einem Prozessschritt V20 wird die Platine 11 an einem Halteelement 16 befestigt.

In einem weiteren Prozessschritt V30 wird das Halteelement 16 in den Spalt eingeschoben, wobei das Halteelemente 16 von einer Position außerhalb des Spalts in einer Radialebene in Richtung des Bodenelements bewegt wird. Insbesondere wird bei dem Einschieben des Halteelements 16 in den Spalt das Halteelement 16 gleichzeitig mit dem ersten Batteriemodul 8 und dem zweiten Batteriemodul 9 verspannt.

Das Einschieben des Halteelements 16 in den Spalt kann so weit erfolgen, bis das Halteelement 16 mit einer Bodenaufstandsfläche 26 mit der Bodenfläche 5 des Bodenelements 4 in Anlage kommt. Alternativ kann das Einschieben des Halteelements 16 in den Spalt so weit erfolgen, bis das Halteelement 16 mit einer Höhenpositionierungsfläche 24 mit einer Auflagefläche 12 des ersten oder des zweiten Batteriemoduls 8, 9 in Anlage kommt.

In einem weiteren Prozessschritt V40 wird ein Deckel 6 des Gehäuses mit dem Bodenelement 4 verbunden. Dabei wird ein Innenraum 2 zwischen dem Deckel 6 und dem Bodenelement 4 gebildet, in dem das erste Batteriemodul 8, das zweite Batteriemodul 9 und das Halteelement 16 zusammen mit der Platine 11 angeordnet sind. Insbesondere wird während des Prozessschritts V40 das Halteelement 16 zwischen dem Bodenelement 4 und dem Deckel 6 verspannt.

### Bezugszeichenliste

- 1: Batteriemodulanordnung
- 2: Gehäuse
- 3: Innenraum
- 4: Bodenelement
- 5: Bodenfläche
- 6: Deckel
- 7: Deckelfläche
- 8: erstes Batteriemodul
- 9: zweites Batteriemodul
- 10: Batteriemanagementsystem
- 11: Platine
- 12: Auflagefläche
- 13: Seitenanlagefläche
- 14: Befestigungsvorrichtung
- 15: Abschlusswiderstand
- 16: Halteelement
- 17: Schaumstoffkörper
- 18: Aussparung
- 19: Befestigungselement
- 20: Bohrung
- 21: Batteriemodulanlagefläche
- 22: Batteriemodulanlagefläche
- 23: Positionierabschnitt
- 24: Höhenpositionierungsfläche
- 25: Seitenpositionierungsfläche
- 26: Bodenaufstandsfläche
- 27: Abschlussfläche
- 28: Halteabschnitt
- 29: Nut
- 30: Nut
- 31: Befestigungselement

## Patentansprüche

1. Batteriemodulanordnung umfassend:
ein erstes Batteriemodul (8) und ein zweites Batteriemodul (9), die jeweils ein oder mehrere Batteriezellen umfassen,
eine Platine (11) einer Batterieüberwachungseinheit (10); und
ein Halteelement (16), das eine Aufnahme aufweist, in der die Platine (11) angeordnet ist,
**dadurch gekennzeichnet,**
**dass** das Halteelement (16) zwischen dem ersten Batteriemodul (8) und dem zweiten Batteriemodul (9) angeordnet ist.

2. Batteriemodulanordnung nach Anspruch 1,
**dadurch gekennzeichnet,**
**dass** das Halteelement (16) aus einem geschäumten Kunststoff, insbesondere aus expandiertem Polypropylen (EPP), hergestellt ist.

3. Batteriemodulanordnung nach einem der Ansprüche 1 oder 2,
**dadurch gekennzeichnet,**
**dass** das Halteelement (16) als Aufnahme eine Aussparung (18) aufweist, in die die Platine (11) eingesetzt ist, wobei die Platine (11) insbesondere in einer Richtung von dem ersten Batteriemodul (8) hin zu dem zweiten Batteriemodul (9) überstandsfrei in der Aussparung (18) angeordnet ist.

4. Batteriemodulanordnung nach einem der Ansprüche 1 bis 3,
**dadurch gekennzeichnet,**
**dass** die Platine (11) mit einem Befestigungselement (19) an dem Halteelement (16) befestigt ist.

5. Batteriemodulanordnung nach Anspruch 4, **dadurch gekennzeichnet,**
**dass** das Befestigungselement (19) ein Spreizdübel ist, der einen federnden Spreizabschnitt aufweist,
wobei der Spreizabschnitt in einer Bohrung (20) des Halteelements (16) angeordnet ist.

6. Batteriemodulanordnung nach einem der Ansprüche 1 bis 5,
**dadurch gekennzeichnet,**
**dass** das Halteelement (16) eine erste Batteriemodulanlagefläche (21) aufweist, die dem zweiten Batteriemodul (8) gegenüberliegt, und dass das Halteelement (16) eine zweite Batteriemodulanlagefläche (22) aufweist, die dem ersten Batteriemodul (9) gegenüberliegt,
wobei die erste Batteriemodulanlagefläche (21) und die zweite Batteriemodulanlagefläche (22) in einer Richtung quer zu der ersten Batteriemodulanlagefläche (21) und/oder der zweiten Batteriemodulanlagefläche (22) zumindest abschnittsweise in Überdeckung zueinander angeordnet sind.

7. Batteriemodulanordnung nach Anspruch 6,
**dadurch gekennzeichnet,**
**dass** im nichtmontierten Zustand des Halteelements (16) ein Abstand der ersten Batteriemodulanlagefläche (21) von der zweiten Batteriemodulanlagefläche (22) in einer Richtung orthogonal zu der ersten Batteriemodulanlagefläche (21) und/oder der zweiten Batteriemodulanlagefläche (22) größer oder gleich einem Abstand des ersten Batteriemoduls von dem zweiten Batteriemodul in der gleichen Richtung ist.

8. Batteriemodulanordnung nach einem der Ansprüche 6 oder 7,
**dadurch gekennzeichnet,**
**dass** das Halteelement (16) einen ersten Positionierabschnitt (23) aufweist, der eine erste Höhenpositionierungsfläche (24) und eine erste Seitenpositionierungsfläche (25) umfasst,
wobei die erste Batteriemodulanlagefläche (21), die erste Höhenpositionierungsfläche (24) und die erste Seitenpositionierungsfläche (25) orthogonal zueinander ausgerichtet sind und/oder
**dass** das Halteelement (16) einen zweiten Positionierabschnitt (23') aufweist, der eine zweite Höhenpositionierungsfläche (24`) und eine zweite Seitenpositionierungsfläche (25') umfasst,
wobei die zweite Batteriemodulanlagefläche (22), die zweite Höhenpositionierungsfläche (24`) und die zweite Seitenpositionierungsfläche (25') orthogonal zueinander ausgerichtet sind.

9. Batteriemodulanordnung nach Anspruch 8,
**dadurch gekennzeichnet,**
**dass** die erste Höhenpositionierungsfläche (24) und die die zweite Höhenpositionierungsfläche (24`) parallel zueinander ausgerichtet sind und insbesondere in einer gemeinsamen Ebene liegen, und
**dass** das Halteelement (16) eine Bodenaufstandsfläche (26) umfasst, die parallel zu der ersten Höhenpositionierungsfläche (24) und der zweiten Höhenpositionierungsfläche (24`) angeordnet ist,
wobei ein Abstand der Bodenaufstandsfläche (26) von der ersten Höhenpositionierungsfläche (24) größer oder gleich einer Höhe des zweiten Batteriemoduls (9) ist und/oder ein Abstand der Bodenaufstandsfläche (26) von der zweiten Höhenpositionierungsfläche (24`) größer oder gleich einer Höhe des ersten Batteriemoduls (8) ist.

10. Batteriemodulanordnung nach einem der Ansprüche 8 oder 9,
**dadurch gekennzeichnet,**
**dass** die erste Seitenpositionierungsfläche (25) und die zweite Seitenpositionierungsfläche (25') parallel zueinander angeordnet und jeweils in entgegengesetzte Richtungen aufeinander zu ausgerichtet sind,
wobei ein Abstand der ersten Seitenpositionierungsfläche (25) von der zweiten Seitenpositionierungsfläche (25') größer oder gleich einer gemeinsamen Breite des ersten Batteriemoduls (8) und des zweiten Batteriemoduls (9) ist.

11. Batteriemodulanordnung nach einem der Ansprüche 9 oder 10,
**dadurch gekennzeichnet,**
**dass** die Batteriemodulanordnung (1) ein Gehäuse (2) mit einem Innenraum (3) umfasst, in dem das erste Batteriemodul (8), das zweite Batteriemodul (9) und das Halteelement (16) angeordnet sind, und
**dass** das Halteelement (16) eine Abschlussfläche (27) aufweist, die insbesondere parallel zu der Bodenaufstandsfläche (26) angeordnet ist,
wobei ein Abstand der Abschlussfläche (27) von der Bodenaufstandsfläche (26) größer oder gleich einer Höhe des Innenraums (3) ist.

12. Batteriemodulanordnung nach einem der Ansprüche 1 bis 11,
**dadurch gekennzeichnet,**
**dass** das Halteelement (16) einen Halteabschnitt (28) mit einem freien Ende aufweist, der sich entlang einer Halteabschnittlängsachse (L_28) erstreckt, und
**dass** der Halteabschnitt (28) eine Ausnehmung (29) aufweist, in der ein elektronisches Bauteil (15) angeordnet ist.

13. Batteriemodulanordnung nach Anspruch 12,
**dadurch gekennzeichnet,**
**dass** die Ausnehmung (29) als eine erste Nut ausgestaltet ist, die parallel zu der Halteabschnittlängsachse (L_28) verläuft, und
**dass** in Umfangsrichtung um die Halteabschnittlängsachse (L_28) eine zweite Nut (30) in dem Halteabschnitt (28) ausgebildet ist,
wobei in der zweiten Nut (30) ein ringförmiges Befestigungselement (31) angeordnet ist, das das elektronische Bauteil (15) mit dem Halteabschnitt (28) verbindet.

14. Montageverfahren einer Platine eines Batteriemanagementssystems in einer Batteriemodulanordnung, insbesondere in einer Batteriemodulanordnung nach einem der vorherigen Ansprüche, umfassend die Schritte:
(V10): Montieren eines ersten Batteriemoduls (8) und eines zweiten Batteriemoduls (9) in einem Bodenelement (4) eines Gehäuses (2) entlang einer Längsachse (L), sodass zwischen dem ersten Batteriemodul (8) und dem zweiten Batteriemodul (9) ein Spalt gebildet ist;
(V20): Befestigen der Platine (11) an einem Halteelement (16); und
(V30): Einschieben des Halteelements (16) in den Spalt, wobei das Halteelemente (16) von einer Position außerhalb des Spalts in einer Radialebene in Richtung des Bodenelements (4) bewegt wird.

15. Montageverfahren nach Anspruch 15,
**gekennzeichnet durch**,
(V40): Verbinden eines Deckels (6) des Gehäuses (2) mit dem Bodenelement (4), sodass ein Innenraum (3) zwischen dem Bodenelement (4) und dem Deckel (6) gebildet ist, in dem das erste Batteriemodul (8), das zweite Batteriemodul (9) und das Halteelement (16) zusammen mit der Platine (11) angeordnet sind,
wobei gleichzeitig das Halteelement (16) zwischen dem Bodenelement (4) und dem Deckel (6) verspannt wird.
